# EUROPEAN PATENT SPECIFICATION

(11) **EP 1 318 651 B1**
(45) Date of publication and mention of the grant of the patent: **28.02.2007**
(21) Application number: 01128874.3
(22) Date of filing: 05.12.2001
(51) Int. Cl.: H04M 1/725, H04M 1/247, H04M 1/57

(54) **Graphical representation of a call menu**
Graphische Darstellung eines Anrufmenü
Représentation graphique d'un menu d'appel

(43) Date of publication of application: 11.06.2003
(73) Proprietor: Agere Systems Guardian Corporation, Orlando, Florida 32819 (US)
(72) Inventor: Pugliese, Pierluigi, 81539 München (DE)
(74) Representative: Herden, Andreas F.

(56) References cited:
- EP-A- 0 898 405
- WO-A-01/41406
- US-A- 5 533 110
- US-A- 5 923 737

## Description

The invention relates to the representation of at least two linked parties of a transmission system in general and in particular to a transceiver device having such functionality.

As known, in many cases, a transceiver device of a transmission system may handle several links to other transceiver devices in parallel. Especially for an user of a transmission system, such as a mobile radio system for example, it can be very complicated to handle several calls in different states. Such different states may be based for example on the special kind of a call such as an originated call or a terminated, i.e. incoming call to which an interconnection has to be built up or to put an incoming call on hold or even to drop the incoming call.

Additionally, in many transmission systems there is the possibility to change the service of required transmission, for example from transmission of speech to a transmission of data. For example a new link for data transmission may be originated in parallel to an active call for speech transmission speech. Moreover, there are transmission systems enabling the handling of several calls in different states. Thus depending on the specific transmission system a menu for displaying the status of links normally is very complicated for the end users.

For example, using a GSM (Global System for Mobil communication) based mobile station, up to seven calls in different states normally can be handled, of which one can be an active call, another one can be a held call and a third one can be a waiting call, wherein the active or the held call may be a multiparty call up to five parties. Accordingly, this results in an menu intrinsically complicated.

For keeping the displayed menus short, according to known solutions, these are normally created dynamically depending on the current status of the various calls. This causes the user, however, to see different menus almost every time, wherein the more complicated the entire menu is the more the user normally is confused and the less the chances are for the user to understand or to follow the different menus or even in the worth case to see them.

US 5923737 B1 discloses a communication terminal for use in a communication system which comprises a display unit having a display screen onto which call states of different terminals in the system are represented by means of icons of different sizes and shapes, depending on the current call state of the terminal itself and the call states of other terminals in the system, in a quasi three-dimensional communication scene so as to graphically represent and distinguish terminal users involved in a communication scenario, displaying of the icons being such that a terminal user of the terminal perceives a substantial change of the communication scene upon call state changes of the terminal and other terminals in the system.

The extensive graphical representation as taught by US 5923737 B1, however, is not well suited for small displays having a reduced display size.

An object of the invention is to provide a possible way avoiding the problems or drawbacks of the known state of the art as discussed above and especially to provide an improved transceiver device ensuring that the user is getting the information of current transmission situations in an easy, clear and obvious way.

The inventive solution is achieved by a transceiver device and an apparatus incorporating the features of claim 1 and claim 6 respectively.

Preferred and/or advantage refinements or embodiments are the subject matter of the respective dependent claims.

Accordingly, the invention proposes a transceiver device of a transmission system, especially of a mobile radio system comprising means for representing links to which the transceiver device is in an interacting status. By representing or visualizing the links merely one menu is sufficient to clearly point out different states of a plurality of calls merely by adding or deleting a represented link to become evident for user in an easy way.

In praxis it is proposed to provide a display for graphically depicting the current status of links based on at least one incoming or terminated call and/or originated call. Thus by use of an pictorial link graphic or diagram instead of a list or the like the user is able to get a mental picture of the entire actual environmental conditions with regard to the transceiver device being the point of reference.

In particular, to provide a very simple graphical representation which is further improved and can easily be understand it is proposed to use kinds of symbols for representing links.

Preferably the graphical menu of the transceiver device is furthermore comprising the functionality of depicting symbols representing functions which can be activated and/or deactivated.

According to a very preferred embodiment such symbols may represent the function of dropping a link, of putting a link into a hold status, of indicating a preferably user-defined user busy condition and/or of joining at least two links in a multiparty status.

To enable an easy functionality of controlling the links based on incoming or originated calls it is seen as being an advantage to provide means for controlling the links by controlling the graphical menu means.

According to a first preferred embodiment, the control means involves a board having keys which are respectively assigned to a symbol. In addition or as an alternative the control means may comprise a touch sensitive display for directly manipulate symbols depicted by the graphical menu means.

According to a further refinement or as an further alternative it is proposed that the control means is speech operated.

Moreover, according to the invention the transceiver device is in praxis suit to be used in a GSM-based system, a TDMA (Time division Multiple Access)-based system and/or in a UMTS (Universal Mobile Transmission System)-based system, wherein the transceiver device is preferably constructed as being a user equipment such as for example a mobile station.

Subsequently the invention is exemplary described based on a preferred refinement and with regard to the accompanied drawings, in which:

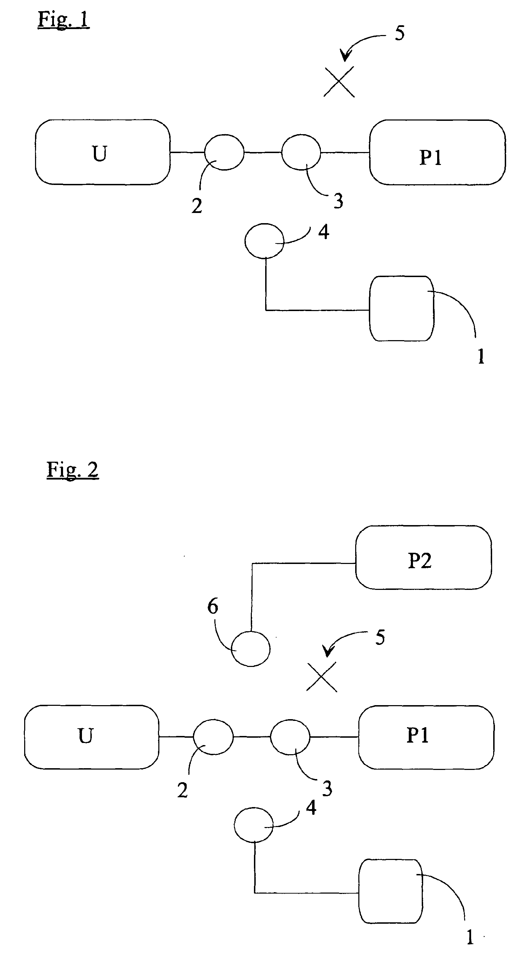

Fig. 1 to Fig. 4 are respectively showing some typical scenarios of handling calls in different status with regard to a mobile station of an exemplary GSM-based mobile radio system.

Referring next to Fig. 1 to 4 in detail a graphical menu is schematically depicted but not accurately drawn to scale that represents two ore more parties U, P1, P2 connected with lines and switches. Thus, an inventive transceiver device incorporating that graphical menu comprises means for converting incoming and/or originated calls into graphical representations of the resulted links.

According to Fig. 1 the display of a specific party or user equipment U, in particular a mobile station graphically depicts the links to which that user equipment U is in an interacting status. Based thereon, Fig. 1 depicts an exemplary scenario wherein one call is active between the specific party or user equipment U and an other first party P1. The connection is visualized by means of symbols, such as lines and switches 2 and 3 wherein each of these switches may be controlled by a keyboard comprised by the mobile station U which is the point of reference. Accordingly, the user can activate or deactivate the switches 2 and 3 or even a switch 4 simply by pressing a corresponding labeled key respectively assigned thereto.

However it should be noted that only the switches that are controllable according to the specific transmission systems specifications, hence on the exemplary embodiment according to the GSM-specifications are labeled.

Based on the scenario as depicted in Fig. 1, the end user of the mobile station U may put the call terminated or originated by the first party P1 on a hold condition means 1 simply by deactivating the connection between the switches 2 and 3 by activating switch 4 to establish a connection between the switches 3 and 4. On the other hand side, the end user of the mobile station U may drop the call by activating the cross-marked switch 5 resulting in an deactivation of the connection between the switches 2 and 3 without putting the call on hold 1.

Fig. 2 schematically depicts a scenario wherein one call is active between the mobile station U and a first party P1 graphically depicted trough the line-connection via the switches 2 and 3 and a further call originated by a further second party P2 is coming in as depicted by the switch 6.

A first possibility for the end user of the mobile station U is to put the active call relating to the first party P1 on hold 1 by activating the connection between the switches 3 and 4 thereby deactivating the connection between the switches 2 and 3. According to a further possibility the active call with the first party P1 can be dropped by establishing a connection between the switches 3 and 5 as described with regard to Fig. 1. Moreover with regard to the second incoming call associated with the second party P2 the switch 6 may be connected to switch 4 simply by pressing the respective key assigned to that function to put the second call on hold means 1 or the call may be dropped by connecting the switch 6 to the cross marked switch 5 by pressing a respective assigned key representing for example a user busy indication.

It is mentioned, that the user busy indication may be the usual busy tone. Using a GSM-based system, according to the example, this is called "user defined user busy" (UDUB) and can be started not only by the called party U being busy, but also by a manual action of the called party U, in particular by pressing the END key.

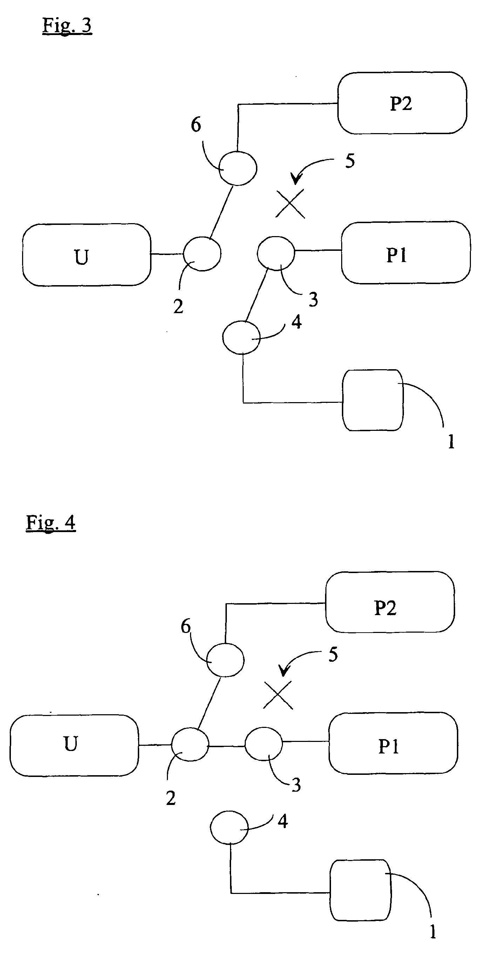

Fig. 3 is representing the scenario based on Fig. 2 after having accepted the incoming call associated with the second party P2 and put the call associated with the first party P1 in hold condition 1. In addition to the possibilities as described with regard to Fig. 2 the end user of the mobile station U now has the further possibility to join the first party P1 and the second party P2 together with the specific mobile station U in a multiparty status by pressing the assigned key which is respectively labeled to release the connection between the switches 3 and 4 by providing a connection between the switches 2 and 3.

The resulting scenario of having joint the three parties U, P1 and P2 in a multiparty status is depicted in Fig. 4. Based on this scenario all links may be hold in multiparty. On the other hand side the switch 6 may be connected to switch 4 to put the second party P2 on the hold means 1 or the switch 6 may be connected with the cross marked switch 5 to drop the second call. Accordingly, the possibilities with regard to the first party P1 are similarly, i.e. to connect switch 3 with switch 4 for holding or to connect switch 3 with switch 5 for dropping that link.

Thus by use of a processing means for processing and converting the information based on each incoming call and/or originated call with regard to a mobile station as point of reference, the interacting links to one ore more parties derived from the respective calls may be graphically depicted in a very simple and evident way. However, since the processing means, as known by a person skilled in the art, can be constructed in several different modifications depending on the specific used transmission system, such as for example a GSM, UMTS and/or TDMA-based system, it is not described in detail.

Also the above description relating to Fig. 1 to 4 is exemplary given on the basis of two further parties P1 and P2 which are in an interconnecting status to the mobile station U, i.e. the party or mobile phone U where the information is displayed, the inventive graphical menu also may handle more than two calls simply by adding respective symbols.

The respective keys for controlling the interconnections by controlling the depicted lines and switches are preferably programmable to built up a user defined keyboard having user defined functional keys. Accordingly a user busy indication for example may be user defined, too.

As can be seen in Fig. 1 to 4, the symbols representing the parties P1 and P2 indicate an exemplar ordering by using the terms "P1" for a first party and "P2" for the second party. However it should be obvious for persons skilled in the art that these symbols also may be blank or for example may indicate the number of the respective party or a name assigned thereto if the number of the respective party is stored in a memory means of the user terminal U. Of course, the symbols used to represent respective situations can be decided by the manufacturer of a specific phone, too.

Furthermore the invention also is covering embodiments wherein the inventive display graphically depicting the representation is constructed as a touch sensitive display so that the user of the transceiver device U can directly touch or tip on the respective lines or switches to control or manipulate the current status. On the other hand side also a speech control controller can be utilized for example by using commands such as "close 2 and 3" to built up a connection between the terminal U and the first party P1 or "connect 3 5" to drop the call of the first party P1.

Moreover the invention is covering modified embodiments being adapted to graphically represent an incoming call in dependence on the respective service used thereby. For example, the representation of a speech based call may differ from the representation of a call using a data based service.

## Claims

1. Transceiver device of a transmission system, especially of a mobile radio system comprising means for representing links to which the transceiver device (U) is in an interacting status, wherein the transceiver device is a mobile station, and wherein the means for representing comprises a display for graphically depicting the current status of links based on at least one incoming and/or originated call and a graphical menu with at least one symbol (1, 2, 3, 4, 5, 6) adapted for representing a link or call and/or adapted for representing a function which can be activated and/or deactivated, **characterized in that** said graphical menu is adapted to represent two ore more parties (U, P1, P2) connected with lines and switches.

2. Transceiver device of claim 1, wherein the dropping of a link (5), the putting of a link into a hold status (1, 4), a preferably user-defined user busy indication (5) and/or the joining of an active call to a held call or a held multiparty call (2, 3, 6) can be represented.

3. Transceiver device of claim 2, comprising means for controlling the links by controlling the graphical menu means.

4. Transceiver device of claim 3, wherein the control means comprises a board having keys which are respectively assigned to a symbol, comprises a touch sensitive display for directly manipulate symbols depicted by the graphical menu means or is speech-operated.

5. Transceiver device of any of the preceding claims, wherein the transmission system is a GSM-based, a UMTS-based and/or a TDMA-based system.

6. Transceiver device of any of the preceding claims, comprising means for converting an incoming call and/or an originated call into a graphical representation of the respective link.

## Patentansprüche

1. Transceiver-Vorrichtung eines Übertragungssystems, insbesondere eines Mobilfunksystems, das ein Mittel zum Darstellen von Verbindungen, mit welchen sich die Transceiver-Vorrichtung (U) in einem interagierenden Status befindet, umfasst, wobei die Transceiver-Vorrichtung ein mobiles Gerät ist und wobei das Mittel zum Darstellen ein Display zum graphischen Darstellen des momentanen Status von Verbindungen auf Basis von zumindest einem eingehenden und/oder ausgelösten Ruf umfasst, sowie ein graphisches Menü mit mindestens einem Symbol (1, 2, 3, 4, 5, 6), das dazu angepasst ist, eine Verbindung oder einen Ruf darzustellen und/oder das dazu angepasst ist, eine Funktion darzustellen, die aktiviert und/oder deaktiviert werden kann,
**dadurch gekennzeichnet, dass**
das graphische Menü dazu angepasst ist, zwei oder mehr mit Linien und Schaltern verbundene Teilnehmer (U, P1, P2) darzustellen.

2. Transceiver-Vorrichtung nach Anspruch 1,
wobei das Fallenlassen einer Verbindung (5), das Legen einer Verbindung auf einen Haltezustand (1, 4), ein vorzugsweise benutzerdefiniertes Besetzt-Zeichen (5) und/oder das Verbinden eines aktiven Rufs mit einem gehaltenen Ruf oder einem gehaltenen Mehr-Teilnehmer-Ruf (2, 3, 6) dargestellt werden kann.

3. Transceiver-Vorrichtung nach Anspruch 2,
welche ein Mittel zum Steuern der Verbindungen durch Steuern der graphischen Menümittel umfasst.

4. Transceiver-Vorrichtung nach Anspruch 3,
wobei das Steuermittel eine Tafel mit Tasten umfasst, die jeweils einem Symbol zugeordnet sind, ein berührungsempfindliches Display zum direkten Manipulieren der durch das graphische Menümittel dargestellten Symbole umfasst oder sprachgesteuert ist.

5. Transceiver-Vorrichtung nach einem der vorhergehenden Ansprüche, wobei das Übertragungssystem ein System auf GSM-Basis, UMTS-Basis und/oder TDMA-Basis ist.

6. Transceiver-Vorrichtung nach einem der vorhergehenden Ansprüche, welche Mittel zum Umsetzen eines eingehenden Rufs und/oder eines ausgelösten Rufs in eine graphische Darstellung der jeweiligen Verbindung umfasst.

## Revendications

1. Dispositif émetteur-récepteur d'un système de transmission, spécialement d'un système radio mobile, comprenant un moyen destiné à représenter des liaisons avec lesquelles le dispositif émetteur-récepteur (U) est dans un état d'interaction, dans lequel le dispositif émetteur-récepteur est une station mobile et dans lequel le moyen de représentation comprend un écran d'affichage destiné à représenter graphiquement l'état courant des liaisons, sur la base d'au moins un appel entrant et/ou sortant, et un menu graphique avec au moins un symbole (1, 2, 3, 4, 5, 6) adapté pour représenter une liaison ou un appel et/ou adapté pour représenter une fonction qui peut être activée et/ou désactivée, **caractérisé en ce que** ledit menu graphique est adapté pour représenter deux parties ou plus (U, P1, P2) connectées par des lignes et des commutateurs.

2. Dispositif émetteur-récepteur selon la revendication 1, dans lequel l'abandon d'une liaison (5), la mise d'une liaison dans un état d'attente (1, 4), une indication d'occupation de préférence définie par l'utilisateur (5) et/ou le rattachement d'un appel actif à un appel en attente ou à une téléconférence en attente (2, 3, 6) peut être représenté.

3. Dispositif émetteur-récepteur selon la revendication 2, comprenant un moyen de commander les liaisons en commandant le moyen de menu graphique.

4. Dispositif émetteur-récepteur selon la revendication 3, dans lequel le moyen de commande comprend une carte possédant des touches qui sont assignées respectivement à un symbole, comprend un écran d'affichage tactile, afin de manipuler directement des symboles représentés par le moyen de menu graphique, ou est commandé vocalement.

5. Dispositif émetteur-récepteur selon l'une quelconque des revendications précédentes, dans lequel le système de transmission est un système à base GSM, un système à base UMTS et/ou un système à base AMRT.

6. Dispositif émetteur-récepteur selon l'une quelconque des revendications précédentes, comprenant un moyen pour convertir un appel entrant et/ou un appel sortant en une représentation graphique de la liaison respective.
